# EUROPÄISCHE PATENTANMELDUNG

(11) **EP 2 042 529 A1**
(43) Veröffentlichungstag der Anmeldung: **01.04.2009**
(21) Anmeldenummer: 08011405.1
(22) Anmeldetag: 24.06.2008
(51) Int. Cl.: C08F 255/06, C08F 279/02, C08L 51/04, C08L 55/02

(54) **Strahlungs-härtbare Elastomermischung**

(30) Priorität: 27.09.2007 DE 102007046641
(71) Anmelder: Carl Freudenberg KG, 69469 Weinheim (DE)
(72) Erfinder: Kröger, Mario, 76646 Bruchsal (DE); Adler, Matthias, 64646 Heppenheim (DE); Bieringer, Ruth, 64668 Rimbach (DE)

(57) **Zusammenfassung**

Gegenstand der Erfindung ist eine Strahlungs-härtbare Elastomermischung, enthaltend ein niedrigviskoses Polymer mit mindestens zwei strahlungsvemetzbaren funktionellen Gruppen pro Molekül, mindestens einen monofunktionalen Reaktivverdünner und mindestens einen Photoinitiator. Die Erfindung betrifft auch Verwendungen der Elastomermischung, Verfahren zu ihrer Herstellung und aus ihnen herstellbare Elastomere.

## Beschreibung

Gegenstand der Erfindung ist eine Strahlungs-härtbare Elastomermischung, enthaltend ein niedrigviskoses Polymer mit mindestens zwei strahlungsvemetzbaren funktionellen Gruppen pro Molekül, mindestens einen monofunktionalen Reaktivverdünner und mindestens einen Photoinitiator. Die Erfindung betrifft auch Verwendungen der Elastomermischung, Verfahren zu ihrer Herstellung und aus ihnen herstellbare Elastomere.

Elastomere sind formfeste, elastisch verformbare Kunststoffe. Der Glasübergangspunkt befindet sich dabei unterhalb der Raumtemperatur. Die Elastomere können sich bei Zug- und Druckbelastung verformen, finden aber danach wieder in ihre ursprüngliche, unverformte Gestalt zurück. Elastomere werden in zahlreichen industriellen Anwendungen eingesetzt, beispielsweise als Materialien für Dichtungen, Reifen und Gummibänder. Elastomere werden hergestellt, indem Polymermischungen quervernetzt werden, beispielsweise unter Einsatz von niedermolekularen Quervemetzem und geeigneten Katalysatoren.

Als Ausgangsstoffe können Polymere eingesetzt werden, die vor dem Aushärten in niedrigviskoser Form vorliegen. Man bezeichnet solche Polymere auch als Flüssigelastomere, Flüssigelastomere haben den Vorteil, dass sie einfach verarbeitet werden können, ohne dass Lösungsmittel zugesetzt werden. Allerdings weisen solche niedrigviskosen Polymere, insbesondere wenn weitere Komponenten wie Füllstoffe zugesetzt werden, oft eine vergleichsweise hohe Viskosität auf und es ist wegen ihrer dickflüssigen oder pastösen Konsistenz aufwändig, sie homogen zu durchmischen oder aufzutragen.

Es besteht allgemein ein Bedürfnis, Elastomere mit verbesserten mechanischen Eigenschaften und Stabilität bereitzustellen. Insbesondere im Bereich der Dichtungstechnik besteht außerdem ein Bedürfnis, Elastomere bereitzustellen, die in Gegenwart von polaren oder unpolaren Flüssigkeiten auch über lange Zeiträume stabil sind. So weisen die bekannten UV-vemetzbaren Elastomere häufig eine unbefriedigende Ölbeständigkeit auf. Auch die Stabilität in aggressiven polaren Flüssigkeiten, wie Elektrolytlösungen in Brennstoffzellen, ist oft nicht ausreichend. Es besteht insbesondere ein Bedarf an Elastomeren, bei denen auch in solchen polaren oder unpolaren Umgebungen die mechanischen Eigenschaften nicht in nachteiliger Weise verändert werden.

Niedrigviskose härtbare Elastomermischungen werden beispielsweise in der Europäischen Patentanmeldung EP 1 266 912 A1 beschrieben. Die Erfinder schlagen vor, niedrigviskose Kautschukgemische bereit zu stellen, indem einem Polymergemisch ein Reaktivverdünner zugesetzt wird. Als Reaktivverdünner werden mono- oder polyfunktionale niedermolekulare Verbindungen eingesetzt. Bei dem Zusatz von niedermolekularen Substanzen wie Reaktiwerdünnern zu härtbaren Elastomergemischen wird die Viskosität verringert, was zu einer besseren Verarbeitbarkeit führt. Der Einbau de Reaktiwerdünner in das Elastomer hat aber häufig zur Folge, dass die mechanischen Eigenschaften in nachteiliger Weise verändert werden. Die bekannten Materialien weisen insbesondere eine verminderte Zugfestigkeit und Reißdehnung auf. Dies ist besonders problematisch, wenn die Elastomere als Dichtungsmaterialien eingesetzt werden. Bei solchen Materialien ist es wichtig, dass sie eine hohe Formbeständigkeit aufweisen und auch nach wiederholter und starker Belastung ihre ursprüngliche Form beibehalten.

Der Erfindung liegt das Problem zugrunde, Elastomere und verarbeitbare Elastomermischungen bereitzustellen, die die oben genannten Nachteile überwinden. Insbesondere sollen Elastomere bereitgestellt werden, die vor dem Aushärten auf einfache Weise verarbeitbar sind und nach dem Aushärten dennoch gute mechanische Eigenschaften, wie. Zugfestigkeit und Reißdehnung, aufweisen.

Das der Erfindung zugrunde liegende Problem wird überraschenderweise gelöst durch eine Strahlungs-härtbare Elastomermischung, enthaltend
a) ein niedrigviskoses Polymer mit mindestens zwei strahlungsvernetzbaren funktionellen Gruppen pro Molekül,
b) mindestens einen monofunktionalen Reaktivverdünner und
c) mindestens einen Photoinitiator.

Im Sinne der Erfindung bedeutet "Elastomermischung", dass bei der Härtung der erfindungsgemäßen Elastomermischung ein Elastomer entsteht. Elastomere sind formfeste, elastisch verformbare Kunststoffe. Der Glasübergangspunkt von Elastomeren befindet sich unterhalb der Raumtemperatur. Elastomere sind dadurch gekennzeichnet, dass sie sich nach Zug- oder Druckbelastung zwar verformen, danach aber wieder ihre ursprüngliche Gestalt annehmen.

Die erfindungsgemäße Strahlungs-härtbare Elastomermischung ist niedrigviskos. Dies bedeutet, dass sie bei der Verarbeitungstemperatur, bevorzugt 25 °C oder Raumtemperatur, pumpbar ist. In einer bevorzugten Ausführungsform ist die erfindungsgemäße Elastomermischung oberhalb 15°C, besonders bevorzugt oberhalb von 0 oder -20 °C niedrigviskos. In bevorzugten Ausführungsformen der Erfindung beträgt die Viskosität bei 20°C <10⁶, insbesondere <10⁵, besonders bevorzugt <10⁴ mPas.

Die erfindungsgemäße Elastomermischung erhält als Komponente a) ein niedrigviskoses Polymer. Niedrigviskose Polymere sind nach dem Stand der Technik bekannt und werden als Ausgangsstoffe zur Herstellung von Polymermischungen und von härtbaren Elastomeren verwendet. Der niedrigviskose Zustand von niedrigviskosen Polymeren resultiert aus der Beschaffenheit und Länge der enthaltenen Polymerketten. Mit "niedrigviskoses Polymer" werden dagegen nicht Polymergemische bezeichnet, die nur deswegen niedrigviskos sind, weil in ihnen ein Lösungsmittel enthalten ist, die ohne das Lösungsmittel jedoch nicht niedrigviskos wären. In einer bevorzugten Ausführungsform enthält das niedrigviskose Polymer a) der erfindungsgemäßen Eiastomermischung weniger als 5, 2 oder 1%, besonders bevorzugt kein Lösungsmittel.

In einer besonders bevorzugten Ausführungsform der Erfindung ist das niedrigviskose Polymer a) ein Kautschuk. Kautschuk ist ein Sammelbegriff für Polymere, aus denen durch Quervernetzung, wie Vulkanisation, Elastomere hergestellt werden und die einen Glaspunkt unter Raumtemperatur besitzen.
In bevorzugten Ausführungsformen ist das Polymer a) beispielsweise ein Polyacrylat, Polyacrylsäure, Polyacrylamid, Polymethacrylat, Polymethylmethacrylat (PMMA), Polyacrylnitril oder Copolymere davon.

Das niedrigviskose Polymer a) der erfindungsgemäßen Elastomermischung kann entweder ein polares Polymer oder ein unpolares Polymer sein. Wenn polare Polymere eingesetzt werden, entsteht nach der Aushärtung ein erfindungsgemäßes Elastomer mit polaren Eigenschaften. Ein solches Elastomer ist besonders geeignet für Dichtungen, die unpolare Flüssigkeiten wie Öle abweisen.

"Polar" bedeutet im Sinne der Erfindung, dass die Polymere nicht mit Ölen quellbar sind. "Unpolar" bedeutet, dass die Polymere nicht mit Wasser quellbar sind.

Das Polymer a) ist insbesondere ausgewählt aus der Gruppe bestehend aus Acrylatkautschuk, Acrylat-Copolymerisat-Kautschuk, Acrylnitril/Butadien-Kautschuk. Bei diesen Ausführungsformen sind die Polymere polar.

In einer weiteren bevorzugten Ausführungsform ist das niedrigviskose Polymer a) ein im Wesentlichen unpolares Polymer. Damit werden erfindungsgemäße Elastomere erhalten, die als Dichtungen in polarer Umgebung, beispielsweise in wässrigen Lösungen oder in Elektrolytlösungen, wie in Brennstoffzellen, geeignet sind.

In einer bevorzugten Ausführungsform der Erfindung ist das Polymer ausgewählt aus der Gruppe bestehend aus Ethylen/Propylen/Dien-Copolymer, Polyisopren, Polybutadien, Polyisobutylen, Polyisobutylen-Copolymerisate, Isopren/Butadien-Copolymer, Isopren/Styrol-Copolymer, Butadien/StyrolCopolymer. Bei diesen Ausführungsformen sind die Polymere unpolar.

Das erfindungsgemäße Elastomer und das Polymer a) können jedoch auch Eigenschaften aufweisen, die nicht eindeutig polar oder unpolar sind.

In einer bevorzugten Ausführungsform ist das niedrigviskose Polymer a) kein Silikonkautschuk.

In einer bevorzugten Ausführungsform der Erfindung ist das niedrigviskose Polymer a) hydriert oder teilhydriert. Die Hydrierung dient zur Entfernung von C=C Doppelbindungen.

In einer bevorzugten Ausführungsform der Erfindung ist die Elastomermischung nach Anspruch 1, **dadurch gekennzeichnet, dass** das niedrigviskose Polymer a) ein mittleres Moleklargewicht von 10 bis 500 kDa aufweist.

Die erfindungsgemäße Elastomermischung ist durch Strahlung härtbar. Besonders bevorzugt ist es, dass die erfindungsgemäße Elastomermischung durch ultraviolettes Licht (UV) härtbar ist. Eine erfindungsgemäße Elastomermischung kann jedoch auch durch andere Arten von Strahlung ausgehärtet werden, beispielsweise durch Licht anderer Wellenlängenbereiche oder durch Elektronenstrahlen.

Das niedrigviskose Polymer a) enthält mindestens zwei strahlungsvemetzbare funktionelle Gruppen pro Molekül. Dies bedeutet, dass ein Molekül bei Einwirkung der Strahlung an mindestens zwei unterschiedlichen Positionen reagieren kann. Eine strahlungsvemetzbare funktionelle Gruppe ist beispielsweise eine einzelne Doppelbindung oder eine (Meth)acrylat-Gruppe. Eine (Meth)acrylat-Gruppe ist im Sinne der Erfindung eine einzige strahlungsvemetzbare funktionelle Gruppe. Im Sinne der Erfindung bedeutet "(Meth)acrylat", dass entweder ein Acrylat oder ein (Meth)acrylat oder ein Gemisch beider Reste vorliegen kann.

In besonderen Ausführungsformen der Erfindung sind die strahlungsvemetzbaren funktionellen Gruppen des niedrigviskosen Polymers a) ausgewählt aus der Gruppe bestehend aus (Meth)acrylat-Resten, (Meth)acryloyl-Resten, Nitril-Resten, C-C-Doppelbindungen oder C-C-Dreifachbindungen. C-C-Doppelbindungen sind insbesondere UV-vemetzbar, wenn es sich um aktivierte Doppelbindungen handelt. Besonders geeignet für die UV-Vemetzung sind beispielsweise Doppelbindung, die Bestandteil von konjugierten Systemen sind, wie in einer (Meth)acrylatgruppe oder allgemein, wenn im Molekül β-Carbonylgruppen vorliegen. Besonders reaktiv sind auch endständige C-C-Doppel- oder Dreifachbindungen.

In einer bevorzugten Ausführungsform der Erfindung sind die durch Strahlung vernetzbaren funktionellen Gruppen bereits Bestandteil des Polymers oder Copolymers. So enthält Polyacrylnitril UV-strahlungsvemetzbare Nitril-Gruppen.

In einer weiteren bevorzugten Ausführungsform der Erfindung ist das niedrigviskose Polymer a) chemisch modifiziert. Dies bedeutet, dass bei oder nach der Polymerisationsreaktion, durch die das Polymer hergestellt wurde, Reste eingefügt werden, die durch Strahlung härtbare funktionelle Gruppen umfassen.

In einer besonders bevorzugten Ausführungsform der Erfindung ist das niedrigviskose Polymer a) ein mit (Meth)acrylat-Resten oder (Meth)acryloyl-Resten modifiziertes Polymer. Besonders bevorzugt ist das chemisch modifizierte Polymer, das unter der Bezeichnung XMAP RC 220 C von Kaneka erhältlich ist. Dieses enthält als Polymerenden UV-vemetzbare Acryloyl-Reste.

In einer besonders bevorzugten Ausführungsform der Erfindung ist das niedrigviskose Polymer a) ein mit (Meth)acrylat-Resten modifizierter Kautschuk. In einer Ausführungsform ist das niedrigviskose Polymer a) kein Polymer, insbesondere kein Ethylen-α-Olefin-Copolymer, das mit (Meth)acryloyl-Resten modifiziert ist.

In einer bevorzugten Ausführungsform der Erfindung enthält die erfindungsgemäße Elastomermischung 15 bis 95%, insbesondere 30 bis 90%, besonders bevorzugt 40 bis 80 % niedrigviskoses Polymer a).

Die erfindungsgemäße Elastomermischung enthält als Komponente b) mindestens einen monofunktionellen Reaktivverdünner. Dabei bedeutet "monofunktionell" im Sinne der Erfindung, dass nur eine funktionelle Gruppe, beispielsweise ein (Meth)acrylatrest, vorhanden ist, die bei der strahlungsinduzierten Reaktion des erfindungsgemäßen Elastomergemischs reagiert. Dagegen ist ein Molekül bifunktionell, wenn es zwei reaktive Reste, wie (Meth)acrylat-Reste, enthält.

"Reaktiwerdünner" im Sinne der Erfindung sind Verbindungen, die die Elastomermischung der Erfindung zum Einen verdünnen und zum Anderen mit ihr reagieren. Der Reaktiwerdünner reagiert mit dem niedrigviskosen Polymer a) in Gegenwart eines Photoinitiators, wenn die Elastomermischung Strahlung, insbesondere UV-Strahlung, ausgesetzt wird. Gleichzeitig verdünnt der Reaktiwerdünner die Elastomermischung. Dies bedeutet, dass die Viskosität durch den Reaktivverdünner erniedrigt wird. Die Elastomermischung ist dadurch einfacher zu verarbeiten.

In einer bevorzugten Ausführungsform der Erfindung ist der Reaktivverdünner b) eine Verbindung mit einem einzigen (Meth)acrylat-Rest. In weiteren bevorzugten Ausführungsformen ist der Reaktivverdünner b) eine Verbindung mit einer einzigen (Meth)acyloyl-, (Meth)acrylsäureester- oder (Meth)acrylsäureamid-Gruppe.

Der Reaktiwerdünner b) ist vorzugsweise niedermolekular. Dies bedeutet, dass er bevorzugt zwischen 3 und 50, besonders bevorzugt zwischen 3 und 30 Kohlenstoffatome aufweist.

In einer bevorzugten Ausführungsform der Erfindung ist der Reaktiwerdünner b) ausgewählt aus der Gruppe bestehend aus einem Alkylacrylat, Hydroxyalkylacrylat, Alkoxyalkylacrylat, Urethanacrylat, Acrylaten mit ringförmigen Alkylresten und Acrylate mit ringförmigen Alkoxyresten. Weitere monofunktionale Reaktiwerdünner, die im Sinne der Erfindung einsetzbar sind, sind beispielsweise in der EP 1 266 912 A1 von S. 9, Zeile 43 bis S. 10, Zeile 10 aufgeführt. Auf die dort genannten monofunktionalen Reaktiwerdünner wird hier ausdrücklich Bezug genommen.

In einer bevorzugten Ausführungsform der Erfindung enthält die erfindungsgemäße Elastomermischung 1 bis 50% insbesondere 2 bis 30%, besonders bevorzugt 5 bis 25% Reaktivverdünner.

Die erfindungsgemäße Elastomermischung enthält einen Photoinitiator c). Der Photoinitiator initiiert die Polymerisationsreaktion zwischen dem niedrigviskosen Polymer und dem Reaktivverdünner, wenn die Elastomermischung geeigneter Strahlung ausgesetzt wird. Entsprechende Photoinitiatoren sind nach dem Stand der Technik bekannt.

Geeignet sind beispielsweise Benzoinether, wie z. B. Benzoinmethylether und Benzoinisopropylether; substituierte Acetophenone, wie z. B. 2,2-Diethoxyacetophenon (erhältlich als Irgacure 651 TM von Ciba), 2,2-Dimethoxy-2-phenyl-1-phenylethanon und Dimethoxyhydroxyacetophenon; substituierte alpha -Ketole, wie z. B. 2-Methoxy-2-hydroxypropiophenon; aromatische Sulfonylchloride, wie z. B. 2-Naphthylsuffonylchlorid; und photoaktive Oxime, wie z. B. 1-Phenyl-1,2-propandion-2-(O-ethoxycarbonyl)oxim.

In einer bevorzugten Ausführungsform der Erfindung enthält die erfindungsgemäße Elastomermischung 0,1 bis 5%, insbesondere 0,2 bis 2%, besonders bevorzugt 0,3 bis 1% Photoinitiator.

In einer besonders bevorzugten Ausführungsform der Erfindung enthält die Elastomermischung zusätzlich einen Füllstoff d). Bei der erfindungsgemäßen Elastomermischung ist überraschenderweise die Einarbeitung beachtlicher Mengen von Füllstoffen möglich, wobei eine niedrige Viskosität verbunden mit guter Verarbeitbarkeit erhalten bleibt. Es hat sich zudem gezeigt, dass bei der Einarbeitung von Füllstoffen eine besondere Verbesserung der Eigenschaften der ausgehärteten Elastomere erzielt wird.

In einer bevorzugten Ausführungsform der Erfindung ist der Füllstoff d) ausgewählt aus der Gruppe der hellen Füllstoffe. Dabei können sowohl mineralische, als auch organische Füllstoffe sowie Kieselsäuren zum Einsatz kommen. Die Partikelgröße der Füllstoffe muss dabei deutlich unterhalb der für die Vernetzung verwendeten Strahlungswellenlänge liegen. Besonders bevorzugt ist die Verwendung von pyrogenen, hydrophobierten Kieselsäuren. Solche Füllstoffe sind beispielsweise unter der Handelsbezeichnung Aerosil von der Degussa AG erhältlich.

In einer bevorzugten Ausführungsform der Erfindung enthält die erfindungsgemäße Elastomermischung 1 bis 65% insbesondere 3 bis 40%, besonders bevorzugt 5 bis 30% Füllstoff.

In einer bevorzugten Ausführungsform der Erfindung enthält das erfindungsgemäße Elastomergemisch keine Lösungsmittel oder keine wesentlichen Anteile an Lösungsmitteln. Insbesondere sind weniger als 5, bevorzugt weniger als 2 und besonders bevorzugt weniger als 0,5 oder 0,1 Gew.-% Lösungsmittel enthalten. "Lösungsmittel" steht für inerte, niedermolekulare Substanzen. Beispiele sind Wasser oder organische Lösungsmittel, wie Ethanol, Methanol, Benzol, Toluol, Chloroform, Ethylacetat oder Ether. Die Abwesenheiten von Lösungsmitteln, insbesondere organischen Lösungsmitteln, ist vorteilhaft, da bei der Verwendung von Lösungsmitteln diese nach der Polymerisation aus dem Elastomer entweichen und sich dadurch die Eigenschaften verändern können. Zudem sollte bei technischen Verfahren der Einsatz von organischen Lösungsmitteln aus ökologischen und gesundheitlichen Gründen vermieden werden.

In einer weiteren bevorzugten Ausführungsform der Erfindung sind weitere Zusatzstoffe enthalten. Allgemein können der erfindungsgemäßen Elastomermischung nach dem Stand der Technik bekannte Zusatzstoffe für Elastomere und Kautschuke zugesetzt werden. In bevorzugten Ausführungsformen der Erfindung sind zusätzlich Alterungsschutzmittel, Farbstoffe, Pigmente, Flammschutzmittel, Weichmacher oder Haftvermittler enthalten. In einer bevorzugten Ausführungsform der Erfindung enthält die erfindungsgemäße Elastomermischung 0 bis 30% insbesondere weniger als 15%, besonders bevorzugt weniger als 5 oder 2% weitere Zusatzstoffe.

In einer bevorzugten Ausführungsform der Erfindung weist die Elastomermischung die Zusammensetzung auf:
a) 30 bis 90% niedrigviskoses Polymer
b) 1 bis 50% Reaktivverdünner
c) 0,1 bis 5% Photoinitiator
d) 0 bis 65% Füllstoff
e) 0 bis 20% weitere Zusatzstoffe.

Gegenstand der Erfindung ist auch ein Verfahren zur Herstellung eines Elastomers, wobei eine niedrigviskose Elastomermischung durch Strahlung ausgehärtet wird. Bevorzugt dauert die Strahlungsbehandlung und/oder der damit verbundene Härtungsvorgang weniger als 10, 5 oder 2 Minuten, insbesondere zwischen 10 und 60 Sekunden.

Gegenstand der Erfindung ist auch ein Elastomer, das durch ein erfindungsgemäßes Verfahren hergestellt wird.

Gegenstand der Erfindung ist auch die Verwendung eines erfindungsgemäßen Elastomers als Dichtungsmaterial, insbesondere in Brennstoffzellen, für lose Dichtungen wie Dichtungsringe, als Klebedichtung oder Softmetalldichtung, als Klebemasse, Beschichtung, Imprägnierung, zur Herstellung von Membranen, sowie zum Schutz von Substraten vor Wasser, Wasserdampf, Säuren, Laugen, Elektrolytlösungen, unpolaren oder polaren Lösungsmitteln, mineralischen und synthetischen Ölen, Alkoholen und Kühlmitteln.

Die erfindungsgemäßen härtbaren Elastomergemische sind zur Anwendung in maschinellen und automatisierten Verfahren geeignet. Weitere bevorzugte Anwendungen sind Raupenauftrag, IPG-Anwendungen, Druckverfahren, formgebende Verfahren wie IM, TM oder CM mit UV-durchlässigen Werkzeugen, Auftrag im Sprühverfahren, Tintenstrahldrucken, Vergussmassen und Formmassen.

Besonders bevorzugt ist der Einsatz in Dichtungen. Im Bereich von Ölanwendungen sind besonders bevorzugte Ausführungsformen Dichtungen, die in Kontakt mit Motor- oder Getriebeöl stehen. Unpolare erfindungsgemäße Elastomere, die beispielsweise auf der Basis von EPDM, BR oder IR als Polymerkomponenten erhalten werden, eignen sich insbesondere für die Anwendung in Gegenwart von Wasser, Wasserdampf, Säuren, Laugen, polaren Lösungsmitteln, Methanol, Methanol/Wasser-Gemischen und Kühlmitteln, wie Glycolen und Glycol/Wasser-Gemischen.

Gegenstand der Erfindung ist auch ein Verbund, enthaltend ein erfindungsgemäßes Elastomer und ein damit verbundenes Substrat.

Die erfindungsgemäßen Elastomermischungen haben den Vorteil, dass sie aufgrund ihrer niedrigen Viskosität einfach handhabbar ist. Zusätzlich kann das Elastomer durch UV-Strahlung auf einfache Art und Weise und vergleichsweise schnell ausgehärtet werden. Wegen der Verwendung von niedrigviskosen Polymeren und der Abwesenheit von Lösungsmitteln entsteht ein gehärtetes Elastomer, das bereits die gewünschte finale Zusammensetzung aufweist und nicht noch nachträglich behandelt werden muss, beispielsweise um ein Lösungsmittel zu entfernen oder um nachträglich die mechanischen Eigenschaften noch zu verbessern, z.B. durch Tempern. Wegen der guten Verarbeitbarkeit kann das erfindungsgemäße Elastomergemisch vor Ort auf Bauteile aufgetragen werden und dort mit UV-Licht ausgehärtet werden. Das erfindungsgemäße Elastomergemisch kann daher flexibel und für zahlreiche verschiedene Anwendungen eingesetzt werden.

Es war für die Erfinder überraschend, dass durch den Zusatz monofunktioneller Reaktiwerdünner sowohl die Viskosität herabgesetzt als auch die mechanischen Eigenschaften verbessert werden können. Die erfindungsgemäßen Elastomere verbinden eine gute Verarbeitbarkeit der zugrunde liegenden erfindungsgemäßen Elastomermischung mit sehr guten mechanischen Eigenschaften der ausgehärteten Elastomere. Bei den nach dem Stand der Technik bekannten UV-vemetzbaren Elastomermischungen und Elastomeren werden solche Eigenschaften nicht erzielt. Die nach dem Stand der Technik bekannten UV-vemetzbaren Elastomerverbindungen weisen häufig unbefriedigende mechanische Eigenschaften und eine geringe Beständigkeit gegen Öle auf. Insbesondere zeigen die erfindungsgemäßen Elastomere eine ausgezeichnete Zugfestigkeit und Reißdehnung. Die erfindungsgemäßen Elastomere zeigen auch ausgezeichnete Eigenschaften hinsichtlich ihres Relaxationsverhaltens, die z.B. durch den Druckverformungsrest charakterisiert werden kann. Hinzu kommt, dass die Elastomere einfach verarbeitbar sind und dass die Härtung durch UV-Strahlung schnell und ohne störende Nebenprodukte erfolgt. Die niedrige Viskosität ermöglicht eine einfache Handhabung. Die erfindungsgemäße Elastomermischung kann sauber und reproduzierbar aufgetragen werden, insbesondere bei maschineller Verarbeitung.

Die erfindungsgemäßen Elastomere können sowohl in hydrophiler Umgebung, wie wässrigen Lösungen, als auch in unpolaren Umgebungen, wie Ölen und Lösungsmitteln, eingesetzt werden. Für den Einsatz im unpolaren Medium sind hydrophile niedrigviskose Polymere als Ausgangsmaterialien besonders geeignet, während für den Einsatz im wässrigen, polaren Medium hydrophobe Polymere besonders geeignet sind.

### Ausführungsbeispiele:

Es wurden verschiedene niedrigviskose Elastomergemische hergestellt und die Fließeigenschaften gemessen. Die Elastomergemische wurden mit UV-Strahlung ausgehärtet und die mechanischen Eigenschaften der erhaltenen Elastomeren gemessen. Dabei wurde von folgendem Grundrezept ausgegangen (phr = Gewichtsanteile bezogen auf 100 g Polymer):

| | |
|---|---|
| 100 phr | ACM-Flüssigelastomer |
| 20 phr | Füllstoff: hydrophobierte, pyrogene Kieselsäure |
| 1 phr | phenolisches Alterungsschutzmittel |
| 0,6 phr | Propriophenon-Photoinitiator |
| 0,3 phr | Phosphinat-Photoinitiator |
| 10 phr | Acrylat |

Als Vergleichsbeispiele wurde das obige Rezept einmal ohne zusätzliches Acrylat und einmal mit einem difunktionellen Acrylat als Reaktivverdünner ausgeführt.

Gemessen wurden die Zugfestigkeit, die Reißdehnung, der Druckverformungsrest (DVR; engl.: Compression Set) und die maximale Volumengeschwindigkeit. Die Materialeigenschaften sind umso besser, je niedriger der Druckverformungsrest ist. Die maximale Volumengeschwindigkeit ist ein Maß für die Fließfähigkeit. Je höher der Wert ist, desto besser sind die Verarbeitungseigenschaften.

Die erfindungsgemäßen Elastomermischungen weisen im Vergleich zum Vergleichsbeispiel ohne Reaktiwerdünner vor dem Aushärten eine deutlich verbesserte Verarbeitbarkeit auf, die sich aus den hohen Werten der Volumengeschwindigkeiten ergibt. Die Steigerung in der Volumengeschwindigkeit kann mehr als 130 % betragen. Auch für Zugfestigkeit und Reißdehnung werden wesentlich verbesserte Werte gefunden, die belegen, dass die mechanische Stabilität der ausgehärteten Elastomere hoch ist. So können die Steigerungen für die Zugfestigkeit mehr als 80 % betragen, die Werte für die Reißdehnung kann um mehr als 50 % verbessert werden.

Im Gegensatz dazu vermittelt der Einsatz eines difunktionellen Reaktionsverdünners zwar eine gute Verarbeitbarkeit, die mechanischen Eigenschaften des Elastomers, insbesondere hinsichtlich der Reißdehnung, sind dagegen deutlich ungünstiger als bei dem erfindungsgemäßen Elastomer. So kann durch Einsatz eines monofunktionellen Reaktiwerdünners im Vergleich zum Einsatz eines difunktionellen Reaktiwerdünners eine um bis zu 180 % verbesserte Reißdehnung erreicht werden.

## Patentansprüche

1. Strahlungs-härtbare Elastomermischung, enthaltend
a) ein niedrigviskoses Polymer mit mindestens zwei strahlungsvernetzbaren funktionellen Gruppen pro Molekül,
b) mindestens einen monofunktionalen Reaktivverdünner und
c) mindestens einen Photoinitiator.

2. Elastomermischung nach Anspruch 1, **dadurch gekennzeichnet, dass** das niedrigviskose Polymer a) ausgewählt aus der Gruppe bestehend aus Acrylatkautschuk, Acrylat-Copolymerisat-Kautschuk, Acrylnitril/Butadien-Kautschuk.

3. Elastomermischung nach Anspruch 1 oder 2, **dadurch gekennzeichnet, dass** das niedrigviskose Polymer a) ausgewählt ist aus der Gruppe bestehend aus Ethylen/Propylen/Dien-Copolymer, Polyisopren, Polybutadien, Polyisobutylen, Polyisobutylen-Copolymerisate, Isopren/Butadien-Copolymer, Isopren/Styrol-Copolymer, Butadien/Styrol-Copolymer.

4. Elastomermischung nach einem der Ansprüche 1 bis 3, **dadurch gekennzeichnet, dass** das niedrigviskose Polymer a) hydriert oder teilhydriert ist.

5. Elastomermischung nach einem der Ansprüche 1 bis 4, **dadurch gekennzeichnet, dass** das niedrigviskose Polymer a) ein mittleres Moleklargewicht von 10 bis 500 kDa aufweist.

6. Elastomermischung nach einem der Ansprüche 1 bis 5, **dadurch gekennzeichnet, dass** die strahlungsvemetzbaren funktionellen Gruppen des niedrigviskosen Polymers a) ausgewählt sind aus der Gruppe bestehend aus (Meth)acrylat-Resten, (Meth)acryloyl-Resten, Nitril-Resten, C-C-Doppelbindungen oder C-C-Dreifachbindungen.

7. Elastomermischung nach einem der Ansprüche 1 bis 6, **dadurch gekennzeichnet, dass** das niedrigviskose Polymer a) ein mit (Meth)acrylatResten oder (Meth)acryloyl-Resten modifiziertes Polymer ist.

8. Elastomermischung nach einem der Ansprüche 1 bis 7, **dadurch gekennzeichnet, dass** der Reaktivverdünner b) eine niedermolekulare Verbindung mit einem einzigen (Meth)acrylat-, (Meth)acryloyl-, (Meth)acrylatester- oder (Meth)acrylatamid-Rest ist.

9. Elastomermischung nach einem der Ansprüche 1 bis 8, **dadurch gekennzeichnet, dass** der Photoinititor c) ausgewählt ist aus der Gruppe bestehend aus Benzoinether, substituierte Acetophenone, substituierte alpha -Ketole, aromatische Sulfonylchloride und Oxime.

10. Elastomermischung nach einem der Ansprüche 1 bis 9, zusätzlich enthaltend
d) einen Füllstoff.

11. Elastomermischung nach Anspruch 10, **dadurch gekennzeichnet, dass** der Füllstoff d) ausgewählt ist aus der Gruppe der hellen Füllstoffe. Dabei können sowohl mineralische, als auch organische Füllstoffe sowie Kieselsäuren zum Einsatz kommen. Die Partikelgröße der Füllstoffe muss dabei deutlich unterhalb der für die Vernetzung verwendeten Strahlungswellenlänge liegen. Besonders bevorzugt ist die Verwendung von pyrogenen, hydrophobierten Kieselsäuren.

12. Elastomermischung nach einem der Ansprüche 1 bis 11, **dadurch gekennzeichnet, dass** zusätzlich Alterungsschutzmittel, Farbstoffe, Pigmente, Flammschutzmittel, Weichmacher und/oder Haftvermittler enthalten sind.

13. Elastomermischung nach einem der Ansprüche 1 bis 12, **dadurch gekennzeichnet, dass** sie die Zusammensetzung aufweist:
a) 30 bis 90% niedrigviskoses Polymer
b) 1 bis 50% Reaktiwerdünner
c) 0,1 bis 5% Photoinitiator
d) 0 bis 65% Füllstoff
e) 0 bis 20% weitere Zusatzstoffe.

14. Verfahren zur Herstellung eines Elastomers, wobei eine niedrigviskose Elastomermischung gemäß einem der Ansprüche 1 bis 13 durch Strahlung ausgehärtet wird.

15. Elastomer, erhältlich durch ein Verfahren nach Anspruch 14.

16. Verwendung eines Elastomers nach Anspruch 15 als Dichtungsmaterial, insbesondere in Brennstoffzellen, für lose Dichtungen wie Dichtungsringe, als Klebedichtung oder Softmetalldichtung, als Klebemasse, Beschichtung, Imprägnierung, zur Herstellung von Membranen, sowie zum Schutz von Substraten vor Wasser, Wasserdampf, Säuren, Laugen, Elektrolytlösungen, unpolaren oder polaren Lösungsmitteln, Alkoholen und Kühlmitteln.

17. Verbund, enthaltend ein Elastomer nach Anspruch 15 und ein damit verbundenes Substrat.
